(19) Europäisches Patentamt
European Patent Office
Office européen des brevets

(11) **EP 1 972 415 B1**

(12) **EUROPEAN PATENT SPECIFICATION**

(45) Date of publication and mention
of the grant of the patent:
**02.01.2019  Bulletin 2019/01**

(51) Int Cl.:
**B25J 9/16** (2006.01)

(21) Application number: **07104815.1**

(22) Date of filing: **23.03.2007**

(54) **Robots with collision avoidance functionality**

Roboter mit Kollisionsvermeidungsfunktion

Robots avec fonction d'évitement de collision

(84) Designated Contracting States:
**DE FR GB**

(43) Date of publication of application:
**24.09.2008  Bulletin 2008/39**

(73) Proprietor: **Honda Research Institute Europe GmbH**
**63073 Offenbach/Main (DE)**

(72) Inventors:
• **Sugiura, Hisashi**
**60488 Frankfurt (DE)**
• **Janssen, Herbert**
**63165 Mühlhausen (DE)**
• **Gienger, Michael**
**60599 Frankfurt (DE)**

(74) Representative: **Rupp, Christian et al**
**Mitscherlich PartmbB**
**Patent- und Rechtsanwälte**
**Sonnenstraße 33**
**80331 München (DE)**

(56) References cited:
FR-A- 2 861 857    US-A- 5 347 459
US-A- 5 737 500

• **NEMEC B ET AL: "Implementation of force control on redundant robot" INTELLIGENT ROBOTS AND SYSTEMS, 1998. PROCEEDINGS., 1998 IEEE/RSJ INTERNATIONAL CONFERENCE ON VICTORIA, BC, CANADA 13-17 OCT. 1998, NEW YORK, NY, USA,IEEE, US, vol. 2, 13 October 1998 (1998-10-13), pages 1314-1319, XP010311517 ISBN: 0-7803-4465-0**

**EP 1 972 415 B1**

**Description**

The present invention generally relates to the field of robots and particularly to robots acting autonomously, which robots need a safety mechanism to avoid collisions with third parties as well as auto collision, i.e. a collision of a first moveable segment part of the robot with a second segment of the robot itself.

When a trajectory of an effector, such as e.g. a robot is controlled, the target state has to be defined. The target state is for example defined by an object that is to be handled by a manipulating arm of a robot. In general the position of the object can be described by three parameters. In addition to the object position it is necessary to describe a spatial orientation which is often made by Kardan- or Euler-angles.

To carry out the movement of an effector of a robot, the trajectory is usually generated by mapping increments from a control parameter space on a configuration space.

The control parameter space or task space is the space of the command elements. The control parameter space is composed of the command elements. The command (also "target" or "task") elements are the elements of a respective command vector. These elements define a useful description of what should be controlled, e.g. the position of a hand or the inclination of a head. The configuration space is the space of controllable degrees of freedom. The configuration space can be composed of individual joints of a robot and/or more complex kinematics mechanisms to which controllable degrees of freedom can be assigned.

The "Null space" represents the dimensional difference between the joint space and the task space. The Null space contains the redundant degrees of freedom, in which movements can be carried out without effecting the task space motion.

A definition of the Null space can be found on the Internet(see http://www-robotics.cs.umass.edu/ Research/Glossary/null_space.html):

Null Space: *The set of arguments of a linear operator such that the corresponding function value is zero. Redundant systems have* a *(local) null space that can be used to address a secondary objective, such as kinematic conditioning, without disturbing a primary task.*

The present invention particularly targets at a particular safety mechanism, i.e. collision avoidance for robots. Traditionally, targets of robots were given by operators and they just tracked planned trajectories. The safety mechanism is an emergency stop mechanism which simply freezes motions if any. However, nowadays the robots, in particular humanoid robots, are expected to work outside of field environment such as factories. They have to interact with dynamic environment and the robot's motions are unpredictable. Thus there is a need for a more advanced safety mechanism, which will be called a collision avoidance mechanism instead of the emergency stop mechanism. The advantage of collision avoidance is not only safety. It does not necessarily stop the robot's target reaching motions and it expands the robot's working range.

The known collision avoidance approaches can be divided into two categories. One is a planning (non real-time) method which generates trajectories taking into account of obstacles.

James Kuffner et al. "Self-collision detection and prevention for humanoid robots", In proceedings of the IEEE International Conference on Robotics and Automation, 2002, proposes a collision avoidance on a humanoid robot. This document proposes a fast collision detection method and a realtime planning for gait generations taking into account of leg interference.

James Kuffner et al. "Dynamically-stable motion planning for humanoid robots", Autonomous Robots, volume 12, pages 105-118, 2002, proposes a dynamics based collision free planning method using Rapidly exploring Random Trees (RRTs). However, these methods are hard to apply for interactive motions because the computation time is higher as the degrees of freedom of robots increase such as humanoid robots.

The other method is reactive (real-time) collision avoidance. It modifies trajectories which are quite simple such as line segments connecting current positions and target positions.

This method has to decide the direction of avoidance and how to switch the priority between target reaching motions and collision avoidance motions depending on a magnitude of danger of collisions in real-time. For instance, the distance between segments is large enough, target reaching motions should have higher priority than collision avoidance ones.

It is known that Collision avoidance can use nullspace optimization criteria (see e.g. Michael Gienger, Herbert Janssen, and Christian Goerick. Task-oriented whole body motion for humanoid robots. In proceedings of the IEEERAS International Conference on Humanoid Robots, 2005; as well as Michael Gienger, Herbert Janssen, and Christian Goerick. Exploiting task intervals for whole body robot control. In proceedings of the IEEE/RSJ International Conference on Intelligent Robots and Systems, 2006).

It is the object of the present invention to propose a robot and a method for controlling a robot, with which a collision avoidance interferes as little as possible with the task execution of the robot.

This object is achieved by a robot and a method for controlling a robot according to the enclosed the independent claims. Advantageous features of the present invention are defined in the corresponding subclaims.. According to a first aspect of the invention, a method for controlling a robot having redundant degrees of freedom is proposed. The method comprises the steps of:

- defining a target for a motion of the robot,
- calculating a movement control signal adapted for the robot reaching the target,
- calculating a collision avoidance control signal based on the closest points of different segments of the robot connected to each other via at least one joint, or a segment of the robot and another object, and
- combining the weighted movement control signal and the weighted collision avoidance control signal, wherein the weight of the motion control output signal is the higher the lower a calculated collision risk, and wherein the weight of the collision avoidance control output signal is the higher the higher the calculated collision risk, and
- controlling a motion of the robot according to the combined weighted signal.

According to the present invention, the collision risk is calculated by determining a difference between a preset threshold distance and a distance between the closest points, the motion control calculation comprises the step of mapping a collision avoidance motion in the nullspace and a target reaching motion in the task space, and the collision avoidance calculation comprises the step of mapping a collision avoidance motion in the task space and a target reaching motion in the nullspace.

With the present invention, when the weights of the whole body control output signal and the collision avoidance control signal are changed gradually, a soft task switching between target reaching by whole body motion and collision avoidance can be reached.

The body control calculation comprise the step of mapping a collision avoidance motion in the nullspace and a target reaching motion in the task space. Thus the body control calculation takes into account collision avoidance in the nullspace even when the collision avoidance control output signal is weighted with zero and thus inactivated.

The collision avoidance control maps a collision avoidance motion in the task space and a target reaching motion in the nullspace. Thus, even when the body motion control signal is weighted with zero and thus inactive, the collision avoidance control is able to contribute to the target reaching in the nullspace, i.e. in case there are redundant degrees-of-freedom available. This promotes the target reaching capabilities of the robot.

The weight of the collision avoidance output signal is zero as long as the distance between the closest points is larger than a preset avoidance threshold distance.

The invention can be implemented e.g. on a humanoid robot, such as e.g. a bipedal walking robot. The test was done not only while standing but while walking. The arm can avoid against moving segments, for example, against the other arm or the leg segment even if the robot is walking. Further features, advantages and objects of the present invention will become evident for the skilled person when reading the following detailed explanation of a preferred embodiment of the invention when taken in conjunction with the figures of the enclosed drawings.

Figure 1 shows a humanoid robot having 17 segments, wherein each segment is composed of one or more sphere-swept-lines or spheres.

Figure 2 illustrates the collision avoidance coordinate system, the origin of which is the closest point on the lower arm. y is align to a line which connects closest points, x is align to the vector which is from elbow to wrist position, z direction is outer product of x and y axis.

Figure 3 shows different control modules of a robot according to the present invention.

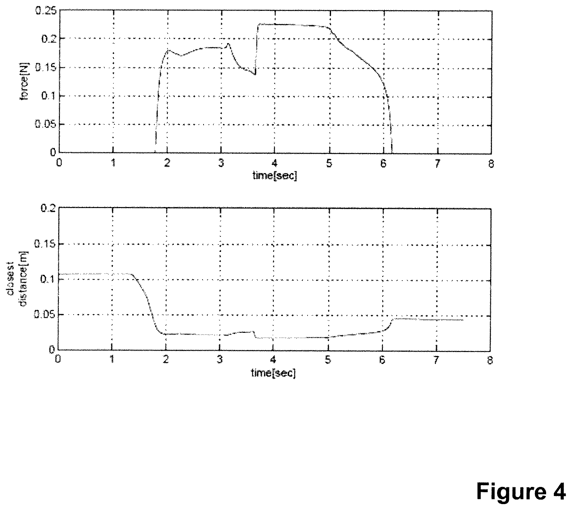

Figure 4 illustrates the virtual force (upper graphics) being a function of the closest distance).

DISTANCE COMPUTATION

For collision avoidance, it is necessary to compute distances and closest points between segments which are the physical links separated by joints. It is more complex to compute actual distances and closest points for all possible segment pairs of humanoid robots with respect to computation time as the invention seeks to compute them on the embedded computer of the robot.

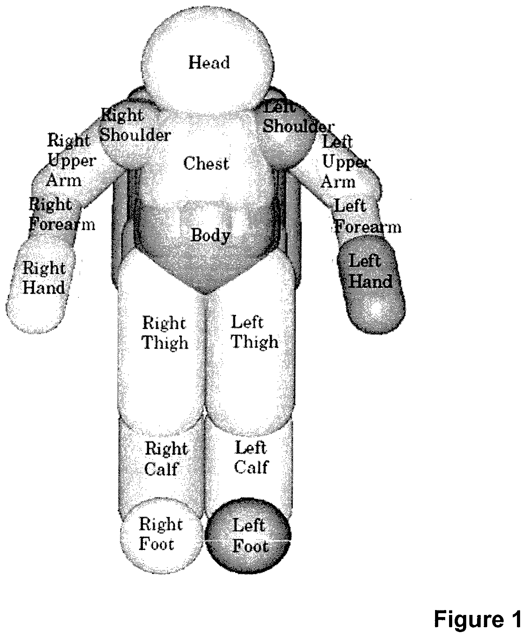

Thus the invention proposes to define a collision model with primitive objects as shown in Fig.1. Each segment (*Head, Right Shoulder* and so on) is composed of one or more spheres or swept sphere lines (SSLs) in order to cover the shape of the robot. The distances and closest points are then calculated based on this model.

COLLISION AVOIDANCE

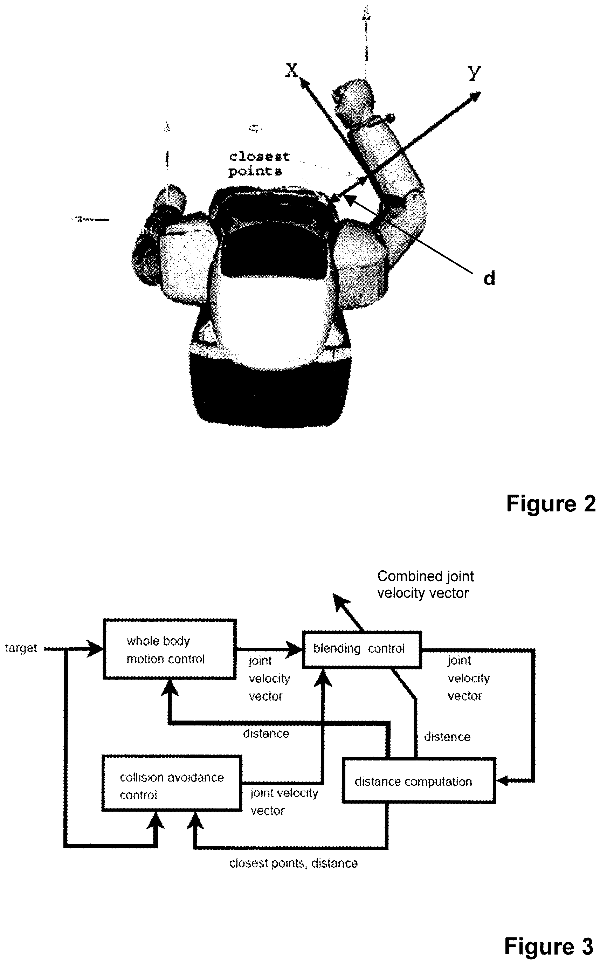

The role of a collision avoidance is to move away segments which are close each other. One of the most efficient direction for this moving apart is aligned to the vector which is connecting the closest points of the segments. The invention defines a collision avoidance coordinate system for task space motions in the collision avoidance control. The example of collision avoidance coordinate system is defined as shown Fig. 2. The origin is the closest point on the lower arm. y is aligned to a line which connects the closest points so that the direction of avoidance is aligned to this axis. x is aligned to the vector which is from elbow to wrist position, z direction is outer product of an unit vector of x and y axis. The collision avoidance moves segments only in the y direction on this coordinate system.

In other words, according to the present invention only one degree of freedom is used for the collision avoidance instead of e.g. three degrees of freedom. The other degrees of freedom remain available for nullspace and thus e.g. for target reaching motions.

Figure 3 shows the main computing blocks for implementing the invention. A target (defined externally or by the robot itself) is supplied to a motion control unit such as e.g. a whole body motion (WBM) control unit and a collision avoidance (CA) unit. The whole body motion is to be understood as being just an example for a motion of the robot.

The WBM unit outputs a first joint velocity vector signal to a blending unit which combines this signal with a second joint velocity vector signal from the CA control unit. The blending control unit outputs a combined joint velocity vector on the basis of which the robot's motion is controlled.

The combined joint velocity vector is furthermore supplied to a distance computing unit calculating the two closest points of different segments of the robot connected to each other via at least one joint, or a segment of the robot and another object. The distance computing unit outputs closest point data and distance information to the CA control unit. The distance computing unit furthermore outputs distance information to the motion control unit and to the blending unit. The blending unit calculates the blending ratio between the first and the second joint velocity vector on the basis of the supplied distance information.

*A. Collision avoidance control using nullspace criteria*

Generally the Cartesian position and orientation **x** of an effector of a robot can be described as a function of the vector of joint variables **q** of the manipulator.

$$\mathbf{x} \;=\; \mathbf{f}(\mathbf{q})$$

While this equation can be obtained easily, the inverse problem is crucial. In the redundant case it is generally not possible to find an inverse mapping $\mathbf{f}^{-1}$. Instead of constructing an inverse function **g(x)** with

$$\mathbf{f}(\mathbf{g}(\mathbf{x})) \;=\; \mathbf{x}$$

analytically, the problem is often reformulated in the velocities utilizing the partial derivation of **f(q)**.

$$\dot{x} = J(q)\dot{q}$$
$$J = \frac{\partial f(q)}{\partial q}$$

$$J = \frac{\partial f(q)}{\partial q}$$

Due to the fact that the inverse of the non-square (analytical) Jacobian **J(q)** does not exist in the redundant case, the pseudo inverse is utilized.

The task space is used for collision avoidance and the nullspace is used for moving to the target using potential function (cost function). In this control method, each joint velocity is computed as

$$\dot{q}_{ca} = J_{ca}^{\#}(q)|_{row,y}\dot{y}_{ca} + N_{ca}\xi_t .\qquad(1)$$

$J_{CA}(q)$ is the collision avoidance Jacobian between closest points.

$N_{ca}$ is a matrix which maps $\xi$ into the nullspace.

$J_{ca}^{\#}(q)|_{row,y}$ is the row vector extracted from the pseudo inverse Jacobian $J_{ca}(q)$ and which is in the y axis in the collision avoidance coordinate system illustrated in Fig.2.

$\dot{y}_{ca}$ is an avoidance velocity which is derived from a virtual force $F_{virtual}$.

In the described example the collision avoidance takes over control only in one degree-of-freedom (here: in the y direction) in order to avoid the closest segment. Zje collision avoidance does not affect other DoFs, which remain available for the task execution (e.g. target reaching motions concerning to x and z direction). It means that the collision avoidance uses one degree of freedom for each arm respectively.

In the following equation (2) D is a pre-set non zero dampening coefficient.

$$\dot{y}_{ca} = \frac{F_{virtual}}{D}\qquad(2)$$

$$F_{virtual} = \begin{cases} d_a - d & \text{if} \quad d < da \\ 0 & \text{otherwise} \end{cases}\qquad(3)$$

If the distance **d** between closest points is shorter than a threshold distance $d_a$ for activating/deactivating the collision avoidance, the virtual force value and thus the avoidance velocity is greater than zero. The virtual force and thus the avoidance velocity increase gradually (e.g. linearly) with the difference between **d** and $d_a$. Thus the collision avoidance is activated as soon as the closest point distance **d** is smaller than the preset threshold value $d_a$. (In the example of Figure 2 the distance **d** between the closest points of the robot is indicated as the distance between the right arm and the front of the body of the humanoid robot).

$N_{ca}$ is a matrix which maps $\xi$ into nullspace and **I** is the identity matrix.

$$N_{ca} = I - J_{ca}(q)^{\#}J_{ca}(q)\qquad(4)$$

The potential function $H_t(r)$ leads to the target for the nullspace. Let $\alpha(t)$ be a step width.

$$\xi_t = -\alpha_t(\frac{\partial H_t(r)}{\partial q})^T\qquad(5)$$

$$\frac{\partial H_t(r)}{\partial q} = \frac{\partial H_t(r)}{\partial r}\frac{\partial r}{\partial q}$$
$$= \frac{\partial H_t(r)}{\partial r}J(q)\qquad(6)$$

$$H_t(r) = \frac{1}{2}(r_{curr} - r_t)^T W_t(r_{curr} - r_t)\qquad(7)$$

$W_t$ weighting matrix

$r_t$ target vector

Thus, the collision avoidance controls joints for the collision avoidance in task space and the target reaching in nullspace.

**B. Whole body motion control**

On the other hand, the whole body motion control is used in order to control the robot which has redundant degrees of freedom also with nullspace optimization criteria as,

$$\dot{q}_{wbm} = J^{\#}_{wbm}(q)\dot{x}_{task} + N_{wbm}\xi_{wbm} \qquad (8)$$

$$N_{wbm} = I - J^{\#}_{wbm}(q)J_{wbm}(q) \quad . \qquad (9)$$

$\dot{q}_{wbm}$      joint velocity vector

$J^{\#}_{wbm}(q)$      pseudo inverse Jacobian of overall joints

$\dot{x}_{task}$      task velocity vector

The matrix $N_{wbm}$ maps an arbitrary joint velocity vector $\xi_{wbm}$ into the nullspace. Two cost functions can be used for the nullspace. Let $\alpha_{jc}$ and $\alpha_{ca}$ be the step width

$$\xi_{wbm} = -\alpha_{jc}\left(\frac{\partial H_{jc}(q)}{\partial q}\right)^T - \alpha_{ca}\left(\frac{\partial H_{ca}(q)}{\partial q}\right)^T \qquad (10)$$

The first cost function penalizes deviations from an arbitrary joint center vector $\bar{q}|$. This cost function seeks to control any joint close to its neutral position. To this regard a joint limit avoidance cost function is used.

$$H_{jc}(q) = \frac{1}{2}(q - \tilde{q})^T W_{jc}(q - \tilde{q}) \qquad (11)$$

$W_{jc}$ is a weighting matrix. In the easiest case, we

choose joint center $\bar{q}|$ accordingly. This cost function allows to keep simply away from the joint limits.

The second one cost function implements the collision avoidance.

$$\frac{\partial H_{ca}(d)}{\partial q} = \frac{\partial H_{ca}(d)}{\partial d}\frac{\partial d}{\partial q}$$
$$= \frac{\partial H_{ca}(d)}{\partial d} J^{\#}_{ca}(q) \qquad (12)$$

$$H_{ca}(d) = \frac{1}{2}(d_{safe} - d)^T W_{ca}(d_{safe} - d) \qquad (13)$$

$W_{ca}$ is a weighting matrix for the collision avoidance. Thus, the whole body motion controls joints for the target reaching in nullspace and the collision avoidance and joint limit avoidance in nullspace.

**C. Integration of whole body motion control and collision avoidance**

The output of the whole body motion control and the collision avoidance one is blended on the joint velocities according to the closest distance. The final joint velocity vector $\dot{q}$ is

$$\dot{q} = \{1 - f(d)\}\,\dot{q}_{wbm} + f(d)\dot{q}_{ca} \qquad . \qquad (14)$$

$\dot{q}_{control}$  is the joint velocity vector which is computed by a robot controller such as e.g. whole body motion control.

$\dot{q}_{ca}$  is the joint velocity vector which is computed by the collision avoidance controller.

**f(d)**  is a gain factor which can assume values between 0 and 1 and represents the magnitude of danger of collisions e.g. as a function of the shortest distance between segments. If **f(d)** is equal to "1", the collision avoidance entirely takes over control. If **f(d)** is equal to "0", the robot controller entirely takes over control. **f(d)** is defined as following:

$$f(d) = \begin{cases} \frac{d-d_a}{d_b-da} & \text{if} \quad d < d_a \\ 0 & \text{otherwise} \end{cases} \qquad (15)$$

$d_b$ is a preset constant threshold distance where the whole body motion control is switched off, wherein $d_a > d_b$.

If **d** is bigger than $d_a$, the collision avoidance control is deactivated and the robot tracks the trajectory which is generated by the whole body motion control. However, trajectories computed by whole body motion takes into account collision avidance in nullspace. If **d** is smaller than $d_a$, the collision avoidance is activated. The ratio between them are depending on the shortest distance which is closest segments decides the priority in between.

Both the collision avoidance control and the robot control use nullspace optimization criteria. These criteria are composed of task space and nullspace. The task space is always higher priority than nullspace. One hand, the robot control maps a target reaching motion in task space and a collision avoidance one in nullspace. On the other hand, the collision avoidance control maps a collision avoidance motion in task space and a target reaching one in nullspace.

|  | motion in task space | motion in nullspace |
|---|---|---|
| robot control ($\dot{q}_{control}$) | target reaching | collision avoidance |
| collision avoidance control ($\dot{q}_{ca}$) | collision avoidance | target reaching |

As illustrated by the above equation (14), the robot control contribution and the collision avoidance control contribution are blending depending on **f(d)**. When **f(d)** is gincreasing, then the collision avoidance motion is getting important with respect to robot motions. However, target reaching motions are compiled in nullspace in the collision avoidance control and if **f(d)** is not "1", the robot control contributes to move to the target. This enables a smooth task priority switching.

*Examples of experiments*

Here are some examples of experiments. The leg movements have been disabled for the collision avoidance as otherwise the robot might simply make steps to avoid collisions without moving arms.

*1) Target is in side of the body with leg movements:*

The given target is inside of the body. When the shortest distance is shorter than $d_a$, the robot steps back due to the virtual force applied to between *lower arm* and *body* by the collision avoidance. On the other hand, the robot moves to the target by the motion control(8), however, not all arm joints can be used because the collision avoidance also use them and the target is inside of the body. Thus the whole body motion compensates the motion by using the leg position which is available. In other words, the robot is pushed back by virtual force. The following experiments don't use leg movements for the collision avoidance in order to make sure arm motions for avoidance.

*2) Target is the inside of the body without leg movements:*

The target of the right arm is inside of the body. When the collision avoidance is deactivated, the lower arm collides the body.

As a result of the collision avoidance, The arm motion stops the side of the body. The robot moves its body to move to the closest point to the target trying to reach the target even if it is the inside the body. It is compensation by the whole body motion control.

*3) Arms' targets are the inside respectively:*

The target for the right arm is the inside of the left arm. The left one is in the same manner.

*4) Body violates a trajectory:*

There is the body on the trajectory between the current position and the target one. This is the typical case which the robot cannot reach the target without the collision avoidance. The collision avoidance pushes outer ward by the virtual force while the arm limbs violate the body or the leg. The virtual force is generated when the shortest distance is shorter than the avoidance threshold distance $d_a$.

*5) Collision avoidance while walking:*

The target is behind the robot when start to walk. Note that the leg position moves but it doesn't contribute the collision avoidance doesn't use leg movements.
The robot looks upward in order to try to reach the target when it is given. But when the robot just before starts to walk, the robot doesn't incline because the posture while walking is almost fixed. Then the robot stops and looks upward again.

*6) Tracking targets given by vision:*

Finally, we tested the collision avoidance for tracking targets which are given by vision. The robot tracks two targets which are crossing. The targets are crossed, which means right arm and left one are crossed.

*7) Applications:*

The collision models which are used in distance computations can be defined everywhere in space and the collision avoidance simply avoids it.
It is also possible to define "virtual objects" in space. It means an area can be defined which a robot segment is not allow to penetrate. This can be used for a "Occlusion avoidance": One of the major problem when robots grasp something are occlusions which their hands hide target objects. According to the invention a virtual obstacle can be designed between the robot head and the target so that the hands of the robot do not pass the gaze line towards to the target. Just before the robot reaches to the object, the virtual object is inactivated.

**Summary:**

The present invention relates to a technique for safety mechanism which protects articulated robots' hardware and its environment. In particular, it can be used for robots which interact with dynamic environment. It is difficult to be predicted in real-time. Here are some examples on robots which this technique can be used:

- Tracking moving targets which are given by cameras: Robots have to track moving targets which cannot be predicted and have to avoid self collisions simultaneously.

- Bimanual manipulations: Robots move both arms at the same time according to tasks. Each arm has a target respectively and they sometimes cross each other.

- Avoidance for moving obstacles: Robots have to avoid such as humans.

The collision avoidance uses only one degree of freedom. On the other hand, target reaching motions are contributed by,

1. nullspace in the collision avoidance control.
2. task space in the robot control.

The fact that the collision avoidance motion is limited to a single degree-of-freedom increases that the nullspace motion of the collision avoidance control allows for a target reaching motion although the collision avoidance control allocates the highest priority to the collision avoidance task and not to the target reaching task. Thus the movement towards a target is more efficient in comparison to prior art approaches.

**GLOSSARY**

| | |
|---|---|
| Effector | In industrial robots it is commonly the manipulator. In humanoid robotics, the effector is often defined as a reference point of the hand, like for instance the finger tip. The effector could also be the head, which is controlled to look at a certain point or in a certain direction. |
| Task coordinates | Coordinates in which the movement of the effector is described. There are many ways to describe effector motions. For effector positions, commonly the x-, y and z-elements of a position vector are chosen. For spatial orientations, the task is often described in Euler angles or quaternions. In many cases, special descriptions for a task are used. |
| Task space | The space that is described by the task coordinates. If e.g. the hand position of a robot in x-, y- and z-direction is controlled, the task space has the dimension 3 and is spanned by these coordinates. |
| Null space | The space in which a motion does not influence the task space motion. If e.g. a robot has 7 degrees of freedom, and the task vector is the 3-dimensional hand position, then the null space has 4 dimensions. The system is redundant with respect to the task. All motion of the arm that does not interfere with the task motion is called the null space motion. |
| Trajectory | A continuous path describing the motion of a system. The trajectory can describe the path of the individual joints, or a path represented in task coordinates. |

**Claims**

1. A method for controlling a robot having redundant degrees of freedom, comprising the steps of:

   - defining a target for a motion of the robot,
   - calculating a motion control signal adapted for the robot reaching the target,
   - calculating a collision avoidance control signal based on the closest points of different segments of the robot connected to each other via at least one joint, or a segment of the robot and another object, and
   - combining the weighted motion control signal and the weighted collision avoidance control signal, wherein the weight of the motion control output signal is the higher the lower a calculated collision risk, and wherein the weight of the collision avoidance control output signal is the higher the higher the calculated collision risk, and
   - controlling a motion of the robot according to the combined weighted signal,

   **characterized in that**
   the collision risk is calculated by determining a difference between a pre-set threshold distance ($d_a$) and a distance (d) between the closest points,
   the motion control calculation comprises the step of mapping a collision avoidance motion in the nullspace and a target reaching motion in the task space, and
   the collision avoidance calculation comprises the step of mapping a collision avoidance motion in the task space and a target reaching motion in the nullspace.

2. The method according to claim 1, wherein

   the weights are changed gradually in order to perform a soft task switching between target reaching by motion and collision avoidance.

3. The method according to claim 1 or 2, wherein

   the weight of the collision avoidance output signal is zero as long as the distance between the closest points is larger than a preset avoidance threshold distance.

4. The method according to any of the preceding claims, comprising the steps of:

carrying out a collision avoidance control by

- calculating the two closest point of different segments of the robot connected to each other via at least one joint, or a segment of the robot and another object, and
- controlling a collision avoidance motion of the robot only in the dimension along the connection line between the closest points.

5. The method according to claim 4, wherein

the nullspace of the collision avoidance control is allocated to the target reaching by motion.

6. A computer program product, implementing a method according to any of the preceding claims when run on a computing device.

7. A robot having a motion control unit and redundant degrees of freedom, wherein

the motion control unit of the robot comprises

- a distance computing module calculating the two closest points of different segments of the robot connected to each other via at least one joint, or a segment of the robot and another object, and outputting
- a motion control module,
- a collision avoidance module supplied with an output signal from the distance computing module,
- a blending control unit for combining the weighted output control signals of the motion control module and the collision avoidance control module, wherein

the weight of the motion control output signal is the higher the lower a calculated collision risk, and wherein the weight of the collision avoidance control output signal is the higher the higher the calculated collision risk,

**characterized in that**

the collision avoidance module is adapted to calculate said collision risk by determining a difference between a pre-set threshold distance ($d_a$) and a distance ($d$) between the closest points,
the motion control module comprises means is adapted to map a collision avoidance motion in the nullspace and a target reaching motion in the task space, and
the collision avoidance module is adapted to map a collision avoidance motion in the task space and a target reaching motion in the nullspace.

**Patentansprüche**

1. Verfahren zum Steuern eines Roboters, der redundante Freiheitsgrade hat, umfassend folgende Schritte:

- Definieren eines Ziels für eine Bewegung des Roboters,
- Berechnen eines Bewegungssteuersignals, das so angepasst ist, dass der Roboter das Ziel erreicht,
- Berechnung eines Steuersignals zur Kollisionsvermeidung basierend auf den nächsten Punkten von unterschiedlichen Segmenten des Roboters, die miteinander über wenigstens ein Gelenk verbunden sind, oder eines Segments des Roboters mit einem anderen Objekt, und
- Kombinieren des gewichteten Bewegungssteuerungsignals und des gewichteten Steuersignals zur Kollisionsvermeidung, wobei das Gewicht des Bewegungssteuerung- Ausgangssignals umso größer ist, je kleiner ein berechnetes Kollisionsrisiko ist und wobei das Gewicht des Steuerungsausgabesignals zur Kollisionsvermeidung umso größer ist, je größer das berechnete Kollisionsrisiko ist, und
- Steuern einer Bewegung des Roboters gemäß dem kombinierten, gewichteten Signal,

**dadurch gekennzeichnet, dass**

das Kollisionsrisiko durch Berechnen einer Differenz zwischen einem voreingestellten Abstandsgrenzwert ($d_a$) und eines Abstands (d) zwischen den nächsten Punkten berechnet wird,
die Berechnung der Bewegungssteuerung den Schritt des Abgleichens einer Kollisionsvermeidungsbewegung in dem Nullraum und einer Zielerreichungsbewegung in dem Aktionsraum umfasst, und
die Kollisionsvermeidungsberechnung den Schritt des Anpassen einer Kollisionsvermeidungsbewegung in dem Aktionsraum und eine Zielerreichungsbewegung in dem Nullraum umfasst.

2. Verfahren gemäß Anspruch 1, wobei die Gewichte schrittweise geändert werden, um ein sanftes Aufgabenumschalten zwischen einer Zielerreichung durch Bewegung und Kollisionsvermeidung zu erreichen.

3. Verfahren gemäß Anspruch 1 oder 2, wobei das Gewicht des Kollisionsvermeidung-Ausgabesignals Null ist, so lange, wie der Abstand zwischen den nächsten Punkten größer ist als ein voreingestellter Vermeidungsgrenzabstand.

4. Verfahren gemäß einem der vorangegangenen Ansprüche, umfassend die Schritte:

Ausführen einer Kollisionsvermeidungssteuerung durch:

- Berechnen der zwei nächsten Punkte unterschiedlicher Segmente des Roboters, die miteinander über wenigstens ein Gelenk verbunden sind, oder eines Segments des Roboters und eines anderen Objekts, und
- Steuern einer Kollisionsvermeidungsbewegung des Roboters nur in der Dimension entlang der Verbindungslinie zwischen den nächsten Punkten.

5. Verfahren gemäß Anspruch 4, wobei
der Nullraum der Kollisionsvermeidungssteuerung der Zielerreichung durch Bewegung zugeordnet ist.

6. Computerprogramm-Produkt, das ein Verfahren gemäß einem der vorangegangenen Ansprüche ausführt, wenn es auf einer Computervorrichtung läuft.

7. Roboter, der eine Bewegungssteuerungseinheit und redundante Freiheitsgrade hat, wobei die Bewegungssteuerungseinheit des Roboters umfasst:

- ein Abstandsberechnungsmodul, dass die zwei nächsten Punkte von unterschiedlichen Segmenten des Roboters, die miteinander über wenigstens ein Gelenk verbunden sind, oder eines Segments des Roboters und eines anderen Objekts berechnet und ausgibt
- ein Bewegungssteuerungsmodul,
ein Kollisionsvermeidungsmodul, welches mit einem Ausgangssignal von dem Abstandsberechnungsmodul versorgt wird,
- eine Steuerungseinheit zum Kombinieren der gewichteten, ausgegebenen Steuersignale des Bewegungssteuerungmoduls und des Kollisionsvermeidung- Steuerungsmoduls, wobei das Gewicht des Bewegungssteuerung-Ausgangssignals umso größer ist, je niedriger ein berechnetes Kollisionsrisiko ist und wobei das Gewicht des Kollisionsvermeidung- Steuerungsausgangssignal umso größer ist, je größer das berechnete Kollisionsrisiko ist,

**dadurch gekennzeichnet, dass**
das Kollisionsvermeidungsmodul angepasst ist, um das Kollisionsrisiko durch bestimmen eines Unterschieds zwischen einem voreingestellten Grenzabstand ($d_a$) und einem Abstand (d) zwischen den nächsten Punkten zu berechnen,
das Bewegungssteuerungsmodul Mittel umfasst, die angepasst sind um eine Kollisionsvermeidungsbewegung in dem Nullraum und eine Zielerreichungsbewegung in dem Aktionsraum aufeinander abzugleichen, und
das Kollisionsvermeidungsmodul angepasst ist, um eine Kollisionsvermeidungsbewegung in dem Aktionsraum und eine Zielerreichungsbewegung in dem Nullraum aufeinander abzugleichen.

**Revendications**

1. Procédé de commande d'un robot ayant des degrés de liberté redondants, comprenant les étapes :

- de définition d'une cible pour un mouvement du robot,
- de calcul d'un signal de commande de mouvement adapté pour le robot atteignant la cible,
- de calcul d'un signal de commande d'évitement de collision d'après les points les plus proches de segments différents du robot reliés les uns aux autres via au moins une articulation, ou d'un segment du robot et d'un autre objet, et
- de combinaison du signal de commande de mouvement pondéré et du signal de commande d'évitement de collision pondéré, dans lequel plus le coefficient de pondération du signal de sortie de commande de mouvement est élevé plus un risque de collision calculé est faible, et dans lequel plus le coefficient de pondération du signal de sortie de commande d'évitement de collision est élevé plus le risque de collision calculé est élevé, et
- de commande d'un mouvement du robot selon le signal pondéré combiné,

**caractérisé en ce que**
le risque de collision est calculé en déterminant une différence entre une distance seuil préétablie ($d_a$) et une distance (d) entre les points les plus proches,
le calcul de commande de mouvement comprend l'étape de mise en correspondance d'un mouvement d'évitement de collision dans l'espace nul et d'un mouvement d'atteinte de cible dans l'espace de tâche, et
le calcul d'évitement de collision comprend l'étape de mise en correspondance d'un mouvement d'évitement de collision dans l'espace de tâche et d'un mouvement d'atteinte de cible dans l'espace nul.

2. Procédé selon la revendication 1, dans lequel
les coefficients de pondération sont changés progressivement afin de réaliser une commutation de tâche douce entre l'atteinte de cible par un mouvement et l'évitement de collision.

3. Procédé selon la revendication 1 ou 2, dans lequel
le coefficient de pondération du signal de sortie d'évitement de collision est zéro tant que la distance entre les points les plus proches est supérieure à une distance seuil d'évitement préétablie.

4. Procédé selon l'une quelconque des revendications précédentes, comprenant les étapes :

de réalisation d'une commande d'évitement de collision par :

- le calcul des deux points les plus proches de segments différents du robot reliés l'un à l'autre via au moins une articulation, ou d'un segment du robot et d'un autre objet, et
- la commande d'un mouvement d'évitement de collision du robot uniquement dans la dimension le long de la ligne de liaison entre les points les plus proches.

5. Procédé selon la revendication 4, dans lequel
l'espace nul de la commande d'évitement de collision est alloué à l'atteinte de cible par un mouvement.

6. Produit-programme d'ordinateur, implémentant un procédé selon l'une quelconque des revendications précédentes lorsqu'il est exécuté sur un dispositif de calcul informatique.

7. Robot ayant une unité de commande de mouvement et des degrés de liberté redondants, dans lequel
l'unité de commande de mouvement du robot comprend

- un module de calcul informatique de distance calculant les deux points les plus proches de segments différents du robot reliés l'un à l'autre via au moins une articulation, ou d'un segment du robot et d'un autre objet, et fournissant en sortie
- un module de commande de mouvement,
- un module d'évitement de collision doté d'un signal de sortie provenant du module de calcul informatique de distance,
- une unité de commande de mélange pour combiner les signaux de commande de sortie pondérés du module de commande de mouvement et du module de commande d'évitement de collision, dans lequel

plus le coefficient de pondération du signal de sortie de commande de mouvement est élevé plus un risque de collision calculé est faible, et dans lequel plus le coefficient de pondération du signal de sortie de commande d'évitement de collision est élevé plus le risque de collision calculé est élevé,
**caractérisé en ce que**

le module d'évitement de collision est adapté pour calculer ledit risque de collision en déterminant une différence entre une distance seuil préétablie ($d_a$) et une distance (d) entre les points les plus proches,
le module de commande de mouvement comprend un moyen qui est adapté pour mettre en correspondance un mouvement d'évitement de collision dans l'espace nul et un mouvement d'atteinte de cible dans l'espace de tâche, et le module d'évitement de collision est adapté pour mettre en correspondance un mouvement d'évitement de collision dans l'espace de tâche et un mouvement d'atteinte de cible dans l'espace nul.

**Figure 1**

**Figure 2**

**Figure 3**

**Figure 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JAMES KUFFNER et al.** Self-collision detection and prevention for humanoid robots. *In proceedings of the IEEE International Conference on Robotics and Automation,* 2002
- **JAMES KUFFNER et al.** Dynamically-stable motion planning for humanoid robots. *Autonomous Robots,* 2002, vol. 12, 105-118
- **MICHAEL GIENGER ; HERBERT JANSSEN ; CHRISTIAN GOERICK.** Task-oriented whole body motion for humanoid robots. *In proceedings of the IEEERAS International Conference on Humanoid Robots,* 2005
- **MICHAEL GIENGER ; HERBERT JANSSEN ; CHRISTIAN GOERICK.** Exploiting task intervals for whole body robot control. *In proceedings of the IEEE/RSJ International Conference on Intelligent Robots and Systems,* 2006